# EUROPEAN PATENT APPLICATION

(11) **EP 4 563 350 A1**
(43) Date of publication of application: **04.06.2025**
(21) Application number: 23315446.7
(22) Date of filing: 01.12.2023
(51) Int. Cl.: B33Y 80/00, C25B 1/04, C25B 9/19, C25B 11/031, C25B 11/032, C25B 11/037, C25B 11/042, C22C 1/04, C22C 19/03, C22C 19/05

(54) **ELECTROLYSER WITH NICKEL ALLOY 3D PRINTED ELECTRODE**

(71) Applicant: H2X Ecosystems, 35170 Bruz (FR); Centre National de la Recherche Scientifique, 75016 Paris (FR); Université de Rennes, 35042 Rennes (FR); Ecole Nationale Supérieure de Chimie de Rennes, 35708 Rennes Cedex 7 (FR); Institut National des Sciences Appliquées de Rennes, 35708 Rennes Cedex 7 (FR)
(72) Inventor: Paul, Stéphane, 29200 Brest (FR); Perrin, Loïc, 72200 Clermont-Créans (FR); Tourneur, Jeoffrey, 35500 Vitré (FR); Fabre, Bruno, 35490 Sens de Bretagne (FR)
(74) Representative: Touroude, Magali Linda

(57) **Abstract**

An electrolysis device configured to produce hydrogen gas from water, the electrolysis device comprising a container (4), the container accommodating an aqueous alkaline solution (5), a cathodic electrode (1), and an anodic electrode (2), an electrical current being selectively applied between the cathodic electrode and the anodic electrode, wherein the cathodic electrode and possibly the anodic electrode, is made of a nickel alloy, with a nickel base alloyed with at least one element chosen among chromium, molybdenum, cobalt and iron, wherein the cathodic electrode and the anodic electrode are manufactured by an additive manufacturing process, from respective first and second mixed metallic powder compounds, wherein the cathodic and anodic electrodes exhibit an outer surface comprising a plurality of first surface patterns (6,7).

## Description

The present disclosure relates to water electrolysis devices, otherwise called water splitting devices or electrolyzers, intended for the production of hydrogen gas, i.e. H₂. The present disclosure relates particularly to nickel alloy 3D-printed electrodes for such electrolysis devices.

### BACKGROUND OF THE DISCLOSURE

Hydrogen gas has many possible applications, like the production of agricultural fertilizers, auxiliary products in oil refineries, and various industrial chemical processes.

Another fast-growing application relates to transportation systems where hydrogen gas is believed to be the most promising solution when considering the broadly appreciated overall ecological impacts of all competing solutions.

In transportation systems, hydrogen gas is a fuel to be used in fuel cells. Furthermore, hydrogen gas is a long-term energy storage solution, suitable to be produced from renewable energy sources. Unlike pure electrical solutions used in transportation systems, the production and consumption of hydrogen gas are timely unrelated.

Electrolyzers are devices used to produce hydrogen and oxygen by electrochemical water splitting. As mentioned above, it is possible to power such devices with excess renewable energy, using hydrogen as a means for energy storage along with batteries, for example. Electrolyzers using liquid electrolytes generally fall into one of three main technologies currently available, namely anion exchange membrane (AEM), proton exchange membrane (PEM), and liquid alkaline systems (AWE). Liquid alkaline systems and PEM systems are the most established technologies. AEM electrolyzers constitute a relatively new technology that is of particular interest herein.

AEM and PEM electrolyzers use two catalytic electrodes arranged in a solution and separated by a membrane. PEM electrolyzers catalytic electrodes are substantially made of precious metals (platinum (Pt) for the cathode, and ruthenium (Ru) or iridium (Ir) for the anode) which are rare and expensive elements.

The choice and design of catalytic electrodes in AEM and AWE systems are one of the targets of the present disclosure. Besides, AEM systems rely on the transfer of hydroxide ions (OH⁻) through a specific membrane arranged in an alkaline solution and interposed between the two catalytic electrodes.

As known *per se,* the half-reactions in AEM and AWE electrolyzers are as follows:

Anode : 4 OH⁻_{(aq)} → 2 H₂O₍ₗ₎ + 4 e⁻ + O_{2(g)}

Cathode : 4 H₂O₍ₗ₎ + 4 e⁻ → 2 H_{2(g)} + 4 OH⁻_{(aq)}

When considering large scale H₂ production, the issue of electrode efficiency and stability over time is critical, both for cathodic electrode and anodic electrode.

The inventors have conducted extensive studies and experiments to find out the most relevant electrode configuration in view of the above viewpoint. The studies and experiments have resulted in features exhibited in the promoted electrodes, believed to be superior to known solutions such as electrodeposited electrodes.

### SUMMARY OF THE DISCLOSURE

According to one aspect of the present disclosure, it is disclosed an electrolysis device configured to produce hydrogen gas from water, the electrolysis device comprising a container (4), the container accommodating an aqueous alkaline solution (5), a cathodic electrode (1), and an anodic electrode (2),
an electrical current being selectively applied between the cathodic electrode and the anodic electrode,
wherein the cathodic electrode is made of a nickel (Ni) alloy, with a nickel base alloyed with at least one element chosen among chromium (Cr), molybdenum (Mo), cobalt (Co) and iron (Fe),
wherein at least the cathodic electrode is manufactured by an additive manufacturing process *(i.e. 3D printing),* from a first mixed metallic powder compound,
wherein the cathodic electrode exhibits an outer surface comprising a plurality of first surface patterns.

Here, "surface patterns" shall be construed as recesses and/or projections, more generally any 3D shape not aligned with a local 2D surface of the electrode (the local plane of the outer surface).

The advantages of 3D printing over electrodeposition on moulded or machined body are discussed below in this disclosure.

Recesses can be blind holes. Recesses exhibit generally a concave shape.

Projections exhibit generally a convex shape, projections are projecting outwardly from the local plane of the electrode's outer surface.

The composition and geometry of the cathodic and anodic electrodes bring efficiency and stability to the use of said electrodes.

Furthermore, the cost-effectiveness of the electrodes is advantageous, enabling scaling up of the electrolysis device at the industrial level.

The electrode composition exhibits a good catalytic effect, with long-term stability, characterized by no detrimental alteration of the active surface, no degradation of the electrode, and no release of metals in the solution.

The first surface patterns promote nucleation and growth of bubbles, as well as their easy release and evacuation, avoiding undesired bubble screen effect.

It should be understood that ternary alloys are encompassed within the scope presented above. A third chemical element can be added to the nickel base and the second chemical element.

Advantageously, the promoted solution is valid for AEM configuration namely anion exchange membrane, and for AWE namely liquid alkaline systems.

According to one aspect, also the anodic electrode is made of a nickel alloy, with a nickel base alloyed with at least one element chosen among chromium, molybdenum, cobalt and iron, and the anodic electrode is also manufactured by an additive manufacturing process, from a second mixed metallic powder compound, and the anodic electrode exhibits an outer surface comprising a plurality of second surface patterns.

Likewise here, *"surface patterns"* shall be construed as recesses and/or projections as discussed above. More generally, any 3D shape not aligned with a local 2D surface of the electrode is possible.

According to a further aspect, the cathodic electrode and the anodic electrode are manufactured via a Selective Laser Melting process, from respectively the first and second mixed metallic powder compounds. This technique allows manufacturing electrodes with complex and precise shapes and patterns, with a sub-millimetric resolution (typically between 0,2 and 1 mm).

According to a further aspect, the **pH** of the aqueous alkaline solution is > 13, preferably > 13,5 using preferentially KOH. Potassium hydroxide brings hydroxide ions that convey electrical current in the solution.

According to a further aspect, the first mixed metallic powder compound may comprise, in mass proportions, X percent of cobalt or molybdenum and 100-X % of nickel, resulting in a cathodic electrode made of **NiCo** alloy or **NiMo** alloy.

For example, X lies between 2 and 40. According to a peculiar example, X can be comprised between 8 and 12.

Furthermore, chromium can be used as a third element to be included in the mixed metallic powder compound. Therefore, the electrode can be made of a ternary alloy such as **NiCoCr** alloy or **NiMoCr** alloy.

According to a further aspect, the second mixed metallic powder compound comprises, in mass proportions, Y percent of iron or molybdenum and 100-Y % of nickel resulting in an anodic electrode made of **NiFe** alloy or **NiMo** alloy. Ternary alloy is also considered for the anodic electrode.

For example, Y lies between 2 and 40. According to a peculiar example, Y can be comprised between 6 and 14.

According to a further aspect, each surface pattern is a localized / individualized surface pattern.

Such individualized surface patterns favor nucleation and the bubbles moving.

According to a further aspect, each surface pattern is a localized recess. The inventors have found that recesses exhibit somehow a better efficiency than projections when considering bubbles nucleation and growth.

According to a further aspect, each recess exhibits a recess depth comprised between 0,1 mm and 0,4 mm, preferably between 0,2 mm and 0,3 mm.

According to a further aspect, each recess exhibits a base size (e.g. circumscribed circle diameter) (D6) comprised between 0,3 mm and 1 mm, preferably between 0,3 mm and 0,4 mm. Each recess can have an inward conical shape, an inward frustoconical shape, an inverted pyramid shape, etc... The recess base may be circular or polygonal, without excluding other shapes.

According to a further aspect, on each of the cathodic electrode and the anodic electrode, the recesses are arranged in an array/matrix having a pitch (E1) comprised between 1 mm and 8 mm, preferably between 1 mm and 2,5 mm. *A high density of surface patterns is therefore provided to maximize the number of bubble nucleation sites.*

According to a further aspect, there is provided one or more linearly extending groove. *The groove extends substantially vertically. Such grooves promote bubbles growth and bubbles upward evacuation.*

According to a further aspect, each surface pattern is a localized projection. *Convex shapes are easier to inspect and measure.*

According to a further aspect, each projection exhibits a projection height comprised between 0,1 mm and 0,4 mm, preferably between 0,2 mm and 0,3 mm.

According to a further aspect, each projection exhibits a base size (circumscribed circle diameter) (D7) comprised between 0,3 mm and 1 mm, preferably between 0,3 mm and 0,4 mm. *Each projection can have an outward conical shape, a frustoconical shape, an inverted pyramid shape, etc... The projection base may be circular or polygonal, without excluding other shapes.*

According to a further aspect, on each of the cathodic electrode and the anodic electrode, the projections are arranged in an array/matrix having a pitch (E1) comprised between 1 mm and 8 mm, preferably between 1 mm and 2.5 mm.

According to a further aspect, there is provided one or more linearly extending rib, such as a bead. The rib extends substantially vertically.

According to a further aspect, the surface may exhibit a surface roughness comprised between 3 µm and 8 µm (micrometer). This surface roughness may alter the surface aerophobicity enabling a facilitated release of the gas bubbles.

According to a further aspect, each of the cathodic electrode and the anodic electrode exhibits a functional surface of at least 25 cm². This is larger than surfaces usually practiced in laboratories. In the present context, there is no upper limit for the electrode surfaces. Large 3D printers are increasingly available.

According to a further aspect, each of the cathodic electrode and the anodic electrode comprises a number of recess and/or projections per cm² comprised between 2 and 32, preferably between 16 and 32. A high density of surface patterns is therefore provided to maximize the number of bubble nucleation sites.

According to a further aspect, each of the cathodic electrode and the anodic electrode conveys an electric current corresponding to a minimum rate of 50 mA per cm² of an overall electrode surface.

According to a further aspect, each of the cathodic electrode and the anodic electrode comprises a body (8) with an outer surface from which the surface patterns take reference, the body having a plate like shape or a cylindrical shape or a spiral shape or a coil/snake shape.

According to a further aspect, the electrolysis device may further comprise an anion exchange membrane (3) separating the container into first and second portions, the cathodic electrode being arranged in the first portion, and the anodic electrode being arranged in the second portion. This is an AEM configuration namely anion exchange membrane.

### BRIEF DESCRIPTION OF THE DRAWINGS

Other features and advantages of the invention appear from the following detailed description of its embodiments, given by way of non-limiting example, and with reference to the accompanying drawings, in which:
- Figure 1 shows a schematic diagram of an example of an electrolysis device in which the promoted electrodes can be used,
- Figure 2 illustrates a detailed view of examples of surface patterns formed as recesses, with a front face view on the left side and a section view on the right side,
- Figure 3 illustrates schematically a portion of an electrode with vertical grooves,
- Figure 4 illustrates a detailed view of examples of surface patterns formed as projections, with a front face view on the left side and a section view on the right side,
- Figure 5 shows a section view of an example of an electrode body having a snake shape,
- Figure 6 shows a section view of an example of an electrode body having a spiral shape,
- Figure 7 illustrates a perspective view of an example of electrode having a cylindrical shape.

### DETAILED DESCRIPTION OF THE DISCLOSURE

In the figures, the same references denote identical or similar elements. For the sake of clarity, various elements may not be represented at scale.

### General arrangement

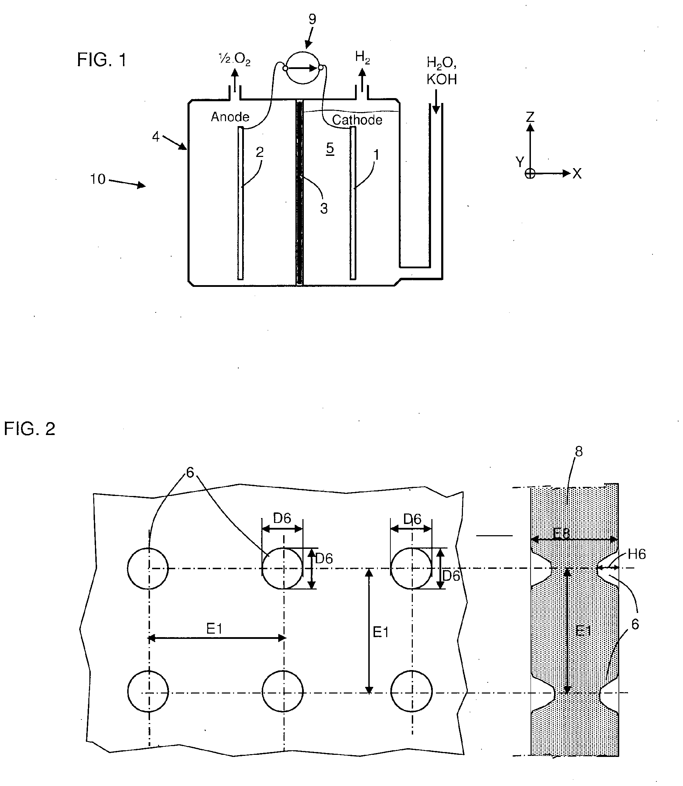

Referring to Figure 1, the illustrated electrolysis device **10** comprises a container **4.** In the illustrated example, the container **4** accommodates an aqueous alkaline solution **5.** The aqueous alkaline solution is based on KOH (potassium hydroxide) wherein K⁺ and OH⁻ ions convey electrical charges. The aqueous alkaline solution is strongly alkaline, namely the **pH** of the aqueous alkaline solution is > 13, preferably the **pH** is > 13,5.

The electrolysis device **10** comprises a cathodic electrode **1** and an anodic electrode **2.**

A current is selectively applied by an electrical generator **9** between the cathodic electrode **1** and the anodic electrode **2.** The electrolysis device is configured to produce hydrogen gas from water when the electrical generator **9** applies a current density of at least 50 mA per cm² which corresponds to a voltage of at most 1,9 V. As a reminder, a base activation voltage at starting currents is 1,23 V. Overvoltage atop 1,23 V is depending on Ohmic resistance and charge transfer (1,23 V corresponds to the standard oxidation potential for the H₂O/O₂ couple). A low overvoltage is beneficial to the efficiency of the electrolysis process.

In the illustrated example, the electrolysis device further comprises an anion exchange membrane **3** separating the container into first and second portions, the cathodic electrode **1** being arranged in the first portion, and the anodic electrode **2** being arranged in the second portion.

As known *per se,* H₂ is produced at the cathodic electrode. O₂ is produced at the anodic electrode. As known *per se,* the half-reactions in both AEM and AWE electrolyzers are as follows:

Anode : 4 OH⁻_{(aq)} → 2 H₂O₍ₗ₎ + 4 e⁻ + O_{2(g)}

Cathode : 4 H₂O₍ₗ₎ + 4 e⁻ → 2 H_{2(g)} + 4 OH⁻_{(aq)}

The container **4** may be pressurized, such that Hz is outputted at the container pressure. Furthermore, H₂ compression might be required to hold H₂ in high pressure storage conditions. The pressure inside the container may be several bars or even several dozens of bars.

### Electrodes: composition and surface patterns.

The cathodic electrode **1** is made of a nickel alloy, with a nickel base alloyed with at least one element chosen among chromium, molybdenum, cobalt and iron.

The anodic electrode **2** is also made of a nickel alloy, with a nickel base alloyed with at least one element chosen among chromium, molybdenum, cobalt and iron.

The cathodic electrode and the anodic electrode are manufactured thanks to an additive manufacturing process, for example via a Selective Laser Melting process from mixed metallic powder compounds.

Selective Laser Melting process melt subsequent layers of powder, with a layer having a thickness of about 20 µm (micrometer).

The cathodic electrode **1** is manufactured from a first mixed metallic powder compound. The first mixed metallic powder compound may comprise, in mass proportions, X percent of cobalt and 100-X % of nickel, resulting in a cathodic electrode made of **NiCo** alloy. Likewise, the first mixed metallic powder compound may comprise, X percent of molybdenum and 100-X % of nickel, resulting in a cathodic electrode made of **NiMo** alloy. For example, X may lie between 2 and 40. According to a peculiar example, X can be comprised between 8 and 12.

A third chemical element can be added to the nickel base and the second chemical element (Co or Mo) to give a ternary alloy. Chromium can be used as such third element to be included in the mixed metallic powder compound. Therefore, the cathodic electrode can be made of a ternary alloy such as **NiCoCr** alloy or **NiMoCr** alloy. Percentage of Cr can be comprised between 1% and 10%.

The anodic electrode **2** is manufactured from a second mixed metallic powder compound. The second mixed metallic powder compound may comprise, in mass proportions, Y percent of iron and 100-Y % of nickel resulting in an anodic electrode made of **NiFe** alloy. Likewise, the second mixed metallic powder compound may comprise, Y percent of molybdenum and 100-Y % of nickel resulting in an anodic electrode made of **NiMo** alloy.

As for the cathodic electrode, the anodic electrode can be designed as a ternary alloy such as **NiFeCr** alloy or **NiMoCr** alloy. Percentage of Cr can be comprised between 1% and 10%.

For example, Y lies between 2 and 40. According to a peculiar example, Y can be comprised between 6 and 14.

Preparation of powder mixtures implies extensive mixing and stirring of the two or three powder components, such that the powder compound is highly homogeneous when introduced in the 3D SLM printer.

The cathodic electrode **1** exhibits an outer surface comprising a plurality of first surface patterns. Similarly, the anodic electrode **2** exhibits an outer surface comprising a plurality of first surface patterns. Figures 2 to 7 and their relative comments apply both to cathodic and anodic electrodes.

As illustrated in Figure 2, there may be provided recesses **6.** Each surface pattern is a localized recess.

Each recess **6** exhibits a recess depth **H6** comprised between 0,1 mm and 0,4 mm. In preferred examples, the recess depth lies between 0,2 mm and 0,3 mm. Each recess **6** exhibits a base size, namely the circumscribed circle diameter **D6** in the circular example. The base size **D6** is comprised between 0,3 mm and 1 mm, preferably between 0,3 mm and 0,4 mm. Each recess **6** can have an inward conical shape, an inward frustoconical shape, an inverted pyramid shape, etc... The recess base may be circular or polygonal, without excluding other geometrical shapes.

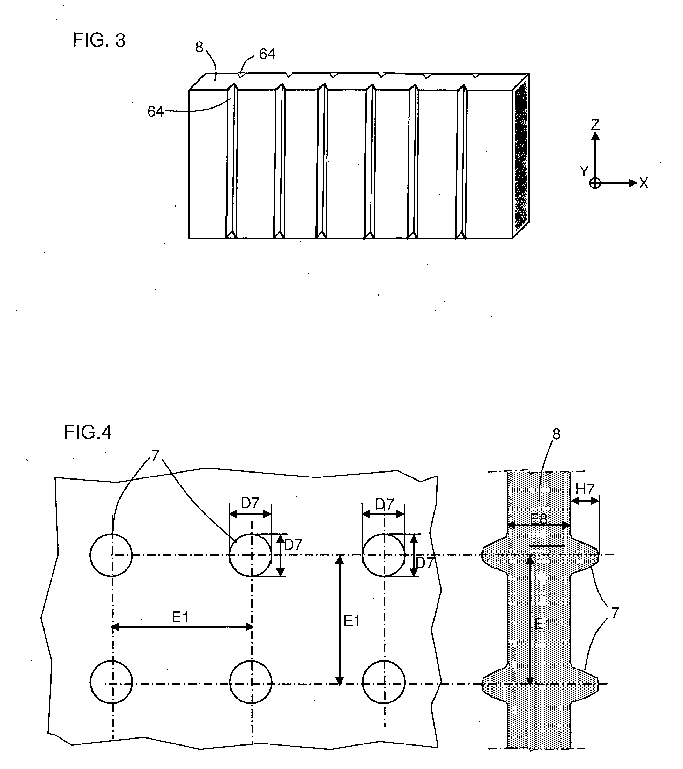

The recesses **6** are arranged in an array/matrix having a pitch **E1** as depicted in Figures 2 and 4. The pitch **E1** is comprised between 1 mm and 8 mm, preferably between 1 mm and 2,5 mm. A high density of surface patterns, here recesses, is therefore provided to maximize the number of bubble nucleation sites. Besides a regular array, the recesses can be arranged in staggered rows or else.

As illustrated in Figure 3, there may be provided grooves **64.** The groove depth is comprised between 0,1 mm and 0,4 mm. In some embodiments, neighboring grooves are spaced by a distance comprised between 1 mm and 3 mm. The groove **64** extends substantially vertically. Such grooves promote bubbles growth and bubbles upward evacuation.

As illustrated in Figure 4, there may be provided projections **7.** Each projection exhibits a projection height **H7** comprised between 0,1 mm and 0,4 mm. Each projection **7** exhibits a base size, namely the circumscribed circle diameter **D7** in the circular depicted example.

The base size **D7** is comprised between 0,3 mm and 1 mm, preferably between 0,3 mm and 0,4 mm. Each projection **7** can have an outward conical shape, a frustoconical shape, a pyramid shape, etc... The projection base may be circular or polygonal, without excluding other geometrical shapes. The arrangement and pitch **E1** of the projections can be similar to what is discussed above for the recesses.

There may be provided linear projections, such as a rib (not illustrated) similar to the groove discussed above. The rib extends substantially in a vertical direction. The rib height is comprised between 0,1 mm and 0,4 mm.

Each of the cathodic electrode and the anodic electrode comprises a number of recess and/or projections per cm² comprised between 2 and 32, preferably between 16 and 32. A high density of surface patterns is therefore provided to maximize the number of bubble nucleation sites.

Each of the cathodic electrode **1** and the anodic electrode **2** comprises a body **8** with an outer surface from which the surface patterns take reference. In some embodiments, the body may have a thickness **E8** comprised between 3 mm and 6 mm. Thicker or thinner bodies are also possible.

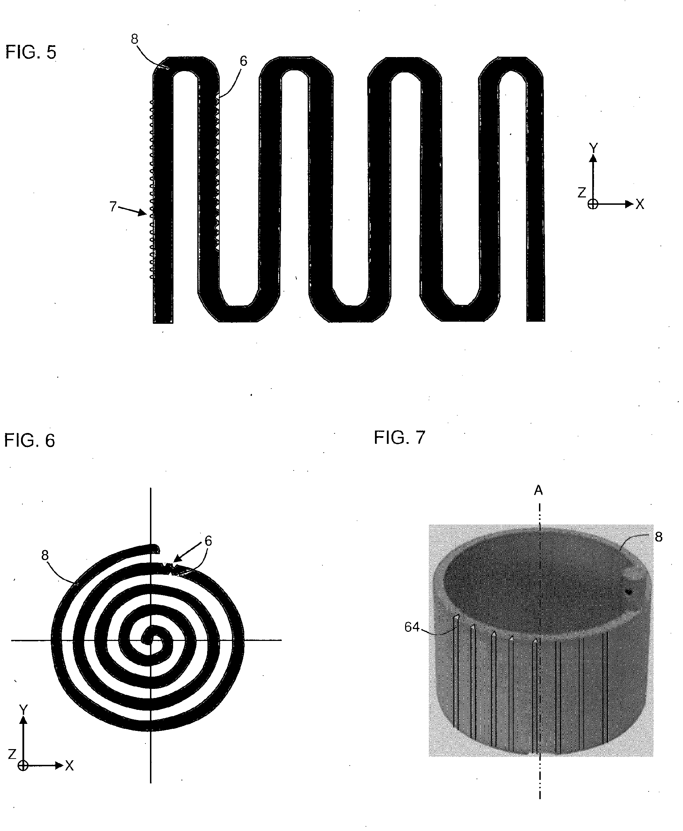

By contrast to Figures 1 to 4 that show a planar electrode body, Figures 5 to 7 show other body shapes. Generally, the body **8** may have a plate like shape or a cylindrical shape or a spiral shape or a coil/snake shape.

On the figures, **Z** denotes the vertical direction whereas **X** and **Y** denote two horizontal directions.

Figure 5 shows a body **8** having a coil/snake shape. Recesses **6** and projections **7** are represented schematically in some regions on the left side, but of course, the entire surface of the body can be populated with recesses (or respectively projections **7**).

Figure 6 shows a body **8** having a spiral shape. Recesses **6** are represented schematically only in some regions, but of course, the entire surface of the body **8** can be populated with recesses (or alternately projections).

Figure 7 shows a body **8** having a cylindrical shape having an axis **A.**

Vertical grooves **64** are distributed on all the outer surface. Grooves can also be arranged in the inner wall of the cylinder.

### Electrode manufacturing process and resulting performance

SLM 3D printing is advantageous over electrodeposition on moulded or machined body. More precisely, in the known art, in a first step, a body is fabricated by molding. Machining can be optionally applied to the body. Thereafter, the body is immersed in a liquid and an electrodeposition or a hydrothermal process is applied to the body. However, the thickness of the deposited layer is not perfectly mastered and depends on operational conditions. Further, if the body comprises small sized blind holes, deposition tends to overfill the small sized blind holes, therefore giving inhomogeneous deposition.

By contrast, the promoted solution to obtain electrodes involves only one manufacturing step. It requires a CAD file to be inputted in the 3D printer, and the prescribed powder mixture. Small sized blind holes can be included in the CAD design. The accuracy of the resulting electrodes depends on the precision of the 3D printing machine. Small recesses as discussed above can be easily achieved with a good accuracy and a good repeatability.

Regarding efficiency, each of the cathodic electrode **1** and the anodic electrode **2** conveys an electric current density of at least 50 mA per cm² of an overall electrode surface.

Thanks to the promoted electrodes, the inventors have generally achieved a sustained performance regarding energy efficiency of less than 55 kWh per kilogram H₂. According to some embodiments of the present invention, an energy efficiency of less than 50 kWh per kilogram H₂ is achieved.

Electrodes can be used several hours, several days continuously without any physical or chemical alteration.

## Claims

1. An electrolysis device configured to produce hydrogen gas from water,
the electrolysis device comprising a container (4), the container accommodating an aqueous alkaline solution (5), a cathodic electrode (1), and an anodic electrode (2),
an electrical current being selectively applied between the cathodic electrode and the anodic electrode,
wherein the cathodic electrode is made of a nickel alloy, with a nickel base alloyed with at least one element chosen among chromium, molybdenum, cobalt and iron,
wherein at least the cathodic electrode is manufactured by an additive manufacturing process, from a first mixed metallic powder compound, wherein the cathodic electrode exhibits an outer surface comprising a plurality of first surface patterns (6,7).

2. The electrolysis device according to claim 1, wherein also the anodic electrode is made of a nickel alloy, with a nickel base alloyed with at least one element chosen among chromium, molybdenum, cobalt and iron, and wherein the anodic electrode is manufactured by an additive manufacturing process, from a second mixed metallic powder compound, wherein the anodic electrode exhibits an outer surface comprising a plurality of second surface patterns.

3. The electrolysis device according to claim 2, wherein the cathodic electrode and the anodic electrode are manufactured via a Selective Laser Melting process, from respectively the first and second mixed metallic powder compounds.

4. The electrolysis device according to claim 1, wherein the first mixed metallic powder compound comprises, in mass proportions, X percent of cobalt or molybdenum and 100-X % of nickel, resulting in a cathodic electrode made of NiCo or NiMo alloy.

5. The electrolysis device according to claim 2, wherein the second mixed metallic powder compound comprises, in mass proportions, Y percent of iron or molybdenum and 100-Y % of nickel resulting in an anodic electrode made of NiFe alloy or NiMo alloy.

6. The electrolysis device according to any of the claims 1 to 5, wherein each surface pattern is a localized or individualized surface pattern, preferably each surface pattern is a recess (6).

7. The electrolysis device according to claim 6, wherein each recess exhibits a recess depth (H6) comprised between 0,1 mm and 0,4 mm, preferably between 0,2 mm and 0,3 mm.

8. The electrolysis device according to any of the claims 6 to 7, wherein each recess exhibits a base size, such as a circumscribed circle diameter, (D6) comprised between 0,3 mm and 1 mm, preferably between 0,3 mm and 0,4 mm.

9. The electrolysis device according to any of the claims 6 to 8, wherein on each of the cathodic electrode and the anodic electrode, the recesses are arranged in an array/matrix having a pitch (E1) comprised between 1 mm and 8 mm, preferably between 1 mm and 2.5 mm.

10. The electrolysis device according to any of the claims 1 to 5, wherein there is provided one or more linearly extending grooves (64).

11. The electrolysis device according to any of the claims 1 to 5, wherein each surface pattern is a localized or individualized projection (7).

12. The electrolysis device according to any of the claims 2 to 11, wherein each of the cathodic electrode and the anodic electrode comprises a number of recesses and/or projections per cm² comprised between 2 and 32, preferably between 16 and 32.

13. The electrolysis device according to any of the claims 2 to 12, wherein each of the cathodic electrode and the anodic electrode conveys an electric current corresponding to a minimum of 50 mA per cm² of an overall electrode surface.

14. The electrolysis device according to any of the claims 2 to 13, wherein each of the cathodic electrode and the anodic electrode comprises a body (8) with an outer surface from which the surface patterns take reference, the body having a plate like shape or a cylindrical shape or a spiral shape or a coil or snake shape.

15. The electrolysis device according to any of the claims 2 to 14, further comprising an anion exchange membrane (3) separating the container into first and second portions, the cathodic electrode being arranged in the first portion, and the anodic electrode being arranged in the second portion.
